(19) **Europäisches Patentamt European Patent Office Office européen des brevets**

(11) **EP 2 446 404 B1**

(12) **EUROPEAN PATENT SPECIFICATION**

(45) Date of publication and mention of the grant of the patent:
**14.12.2016 Bulletin 2016/50**

(51) Int Cl.:
*G06Q 10/00* (2012.01)       *B60G 17/017* (2006.01)
*G06Q 10/08* (2012.01)       *G01G 19/03* (2006.01)

(21) Application number: **10792410.2**

(22) Date of filing: **10.06.2010**

(86) International application number:
**PCT/SE2010/050646**

(87) International publication number:
**WO 2010/151207 (29.12.2010 Gazette 2010/52)**

(54) **A DEVICE FOR DETERMINING OF THE POSITION OF A LOAD ON A HEAVY VEHICLE AND A METHOD THEREFORE**

VORRICHTUNG ZUR BESTIMMUNG DER POSITION EINER LAST AUF EINEM SCHWERLASTFAHRZEUG UND VERFAHREN DAFÜR

DISPOSITIF PERMETTANT DE DÉTERMINER LA POSITION D'UNE CHARGE SUR UN POIDS LOURD ET PROCÉDÉ S'Y RAPPORTANT

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **23.06.2009 SE 0950484**

(43) Date of publication of application:
**02.05.2012 Bulletin 2012/18**

(73) Proprietor: **Scania CV AB**
**151 87 Södertälje (SE)**

(72) Inventor: **ROGGENBUCK, Philip**
**SE-129 39 Hägersten (SE)**

(74) Representative: **Scania CV AB**
**Patents, GP 117kv**
**151 87 Södertälje (SE)**

(56) References cited:
**EP-A2- 0 389 985          WO-A1-2005/075948**
**US-A- 5 015 145          US-A- 5 410 109**
**US-A1- 2004 019 471**

## Description

### Field of the invention

The present invention relates in a first aspect to a device for determination of positioning for cargo which consists of a number of separate cargo units on a freight vehicle provided with a number of wheelshafts.

The invention also relates in a second aspect to a method for determination of positioning for such cargo.

Freight vehicle in this application refers both to a self-propelled freight vehicle and to an unpowered freight vehicle, i.e. a trailer. A combination vehicle, i.e. a truck with one or more trailers, is also covered by the expression freight vehicle.

### Background to the invention

It is important that cargo be positioned on a vehicle correctly as regards how its weight is distributed over the vehicle's wheelshafts.

In the case of cargo consisting of only one unit, this is relatively easy and there are known devices and methods for achieving correct positioning. Thus US 2002/0038193 describes how to determine load distribution on a truck suspended by pneumatic springs at the wheelshafts, using a sensor adapted to measuring the bellows pressure and another sensor adapted to measuring the spring deflection. The measured values are used to calculate and present the position of the centre of gravity of the cargo, the total weight and the net weight of the cargo. The optimum position for the centre of gravity is also calculated and presented. Comparing actual and optimum positions makes it possible for the cargo to be positioned so that its centre of gravity will be as close to the optimum position as possible.

GB 2191 868 describes a device for a freight vehicle for detecting the weight distribution of cargo on the load platform. A display shows the load platform and two lines which represent forward and rearward limits for where the centre of gravity of the cargo should be in order to conform to relevant regulations. It also shows the measured and calculated values for the actual centre of gravity of the cargo.

WO 2005/075948 describes a device for presenting a load-related parameter of a freight vehicle whereby each wheelshaft is provided with a sensor to detect the axle load. There are also devices for measuring the vehicle's total weight, and monitoring and display devices. The load-related parameter indicates how large a percentage of the total weight bears upon a first axle.

WO 2006/106296 describes a method for measuring the centre of gravity of cargo on a freight vehicle whereby measurements from a number of load sensors are used to calculate the total weight of the cargo. The moment from each load sensor about a reference axis is also calculated. The measured values are used to calculate the distance from the reference axis to the centre of gravity of the cargo.

The known devices and methods thus provide information which makes it easier for the vehicle's driver to position cargo optimally as a result of being able to compare actually measured positions with a set-point value. However, only under certain conditions is the information provided by the known devices and methods sufficient to make it easy to distribute the cargo. It works well if the cargo comprises a single unit, a case which is dealt with by merely comparing the actual value with the set-point value for the positioning of the unit in the longitudinal direction and moving the unit a little so that the difference between the actual and set-point values becomes nil or at least acceptably small.

The same also applies with cargo in granular form, e.g. sand or the like. Such cargo may in this context be treated as a single unit whose centre of gravity is relatively easy to move to a predetermined extent by a fairly limited iterative procedure.

In the case of cargo consisting of a number of distinct units, however, the known devices and methods are limited as regards how easy it is to distribute them in such a way as to achieve optimum load distribution.

Knowing the actual and set-point values for the position of the centre of gravity of the whole cargo provides no basis for deciding how to move one or more of the units for optimum load distribution, since the driver has no information about the position of each individual unit, nor in many cases about their weight. Redistributing the cargo therefore entails repeatedly moving one or more of the units until the difference between actual and set-point values is acceptably small. This is time-consuming and is therefore not good transport economics. There is also risk of the driver confining him/herself to making an incomplete correction from actual value to set-point value, resulting in load distribution which leads to the load upon an individual wheelshaft exceeding what is permitted by regulations or is technically permissible.

The object of the present invention is to solve this problem and make it easy to achieve correct load distribution even for the type of cargo which consists of a number of units.

### Summary of the invention

The object is achieved according to the first aspect of the invention by a device for determination of positioning for cargo consisting of a number of separate units on a freight vehicle provided with a number of wheelshafts, which device has the special features of comprising at least one weight sensor, a process unit and signal means for conveying from each weight sensor to the process unit signals representing data from the respective weight sensors, which process unit comprises receiving means for receiving said signals, storage means for storage of data from a sequence of signals from each weight sensor, and processing means for processing of said data, which processing means are adapted to generating output signals which indicate how one or more of said units should be moved or positioned in the longitudinal direction to fulfil a specific load distribution criterion.

The fact that the device thus detects and processes sequential information direct or indirectly about the load upon the respective wheelshafts results in knowledge not only about the total weight of the cargo and the position of its centre of gravity but also about similar data pertaining to each unit. This makes it easy to determine how any of the individual units should be moved. The disadvantages associated with the state of the art are thus avoided and correct loading can be achieved far more quickly and with greater precision.

According to a preferred embodiment, a number of weight sensors are provided on the vehicle to detect the load of the vehicle, including that of its cargo, upon the respective wheelshafts.

The weight sensors thus provided on the vehicle make it easy to have weight information immediately when each unit is put on board the vehicle, obviating the need to be able to determine the weight of the unit before it goes on board. It is also usually the case that a freight vehicle is already provided with weight sensors, which means that existing equipment may be used as components of the device.

According to a further preferred embodiment, a weight sensor is provided at each wheelshaft.

The result is the simplest and most direct means of relating the weight of cargo units to wheelshaft loads, eliminating the need for a special conversion algorithm which would arise if the sensors were situated elsewhere than at the wheelshafts. This embodiment therefore represents in practical terms the most appropriate version.

According to a further preferred embodiment, each weight sensor comprises a pneumatic spring with bellows and a pressure sensor for detecting the pressure in the bellows.

The fact that there are usually pneumatic springs of this kind at the wheelshafts of a freight vehicle makes it easy and practical to use them as components of the invented device.

According to a further preferred embodiment, the load distribution criterion is related to the respective technical maximum load upon the wheelshafts.

According to a further preferred embodiment, the load distribution criterion is related to the respective legislative maximum load upon the wheelshafts.

The embodiments indicated above with reference to load distribution criteria may serve as alternatives or additions to one another. The advantages of any particular alternative may depend on the type of haulage for which the vehicle is intended or the relevant traffic environment.

The load distribution criterion being related to maximum load may for example mean that each wheelshaft should be loaded to an equal percentage of its maximum load.

According to a further preferred embodiment the load distribution criterion is pre-programmed in the process unit.

A result indicating how a certain unit should be moved is thus obtained in the simplest possible way.

According to a further preferred embodiment, a number of alternative load distribution criteria are pre-programmed in the process unit, which is adapted to receiving command signals representing choices of load distribution criterion.

The vehicle's driver is thus able to choose on which criterion to determine the load distribution. This makes it possible to adjust to the specific conditions of a journey where state of road, weather, driving conditions, wind exposure, the importance of complying with rules and regulations, and the vehicle's current technical condition, are examples of factors liable to affect which criterion is adopted.

According to a further preferred embodiment, the process unit is adapted to receiving control signals which affect one or more of the parameters on which the respective load distribution criterion is based.

The result is a still more sophisticated means of adapting to prevailing operating conditions, and hence greater flexibility. Optimum interaction is thus achieved between active involvement of the driver and automatic calculation of positioning for cargo units.

According to a further preferred embodiment, the device comprises a reading means, e.g. a barcode reader, which is signal-connected to the process unit.

This embodiment provides an alternative means of determining the weight of each cargo unit in cases where they are provided with weight indications, e.g. in barcode form on the unit itself or in its delivery note. Where it is thus possible to know the weight of a unit before it is put on board the vehicle, it can already be placed initially at an appropriate position in the longitudinal direction. If the weight of some or all of the units is known before loading, it is in principle possible to calculate and optimise the whole load programme before loading. A particularly high level of loading speed and safety can thus be achieved.

The invention relates also to a freight vehicle provided with a device according to the invention.

EP 2 446 404 B1

The preferred embodiments indicated above of the invented device are referred to in the claims which depend on claim 1. It should be noted that further preferred embodiments may of course take the form of every conceivable combination of the preferred embodiments indicated above.

According to the second aspect of the invention, the stated object is achieved by a method for determining a load of the kind indicated which comprises the special measures of:

- determining the weight of each cargo unit,
- feeding into a process unit signals which represent weight data for each cargo unit,
- processing said data in the process unit to calculate a position in the longitudinal direction for at least one of the cargo units,
- using the process unit to calculate a desired position in the longitudinal direction for said at least one of the cargo units on the basis of a specific load distribution criterion,
- using the process unit to compare said calculated position with said calculated desired position, and
- using the process unit to generate output signals which indicate how one or more of the cargo units should be moved or positioned in the longitudinal direction in order to fulfil the load distribution criterion.

According to preferred embodiments of the invented method, it is effected with a device according to the present invention, preferably according to any of its preferred embodiments.

The invented freight vehicle and the invented method afford advantages similar to those achieved with the invented device and its preferred embodiments described above.

The invention is explained in more detail in the detailed description set out below of examples of it with reference to the accompanying drawings.

**Brief description of the drawings**

Fig. 1 is a schematic side view of a freight vehicle with a device according to the invention.
Fig. 2 is an illustration of a process unit in a device according to the invention.
Fig. 3 is an illustration of a process unit in a device according to another example of the invention.

**Description of embodiment examples**

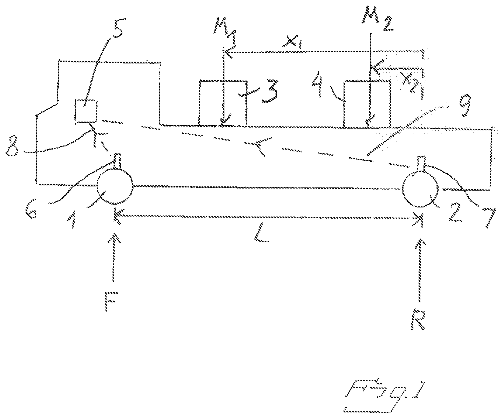

Fig. 1 illustrates a device according to the invention in a simple example in which the freight vehicle has only two wheelshafts 1, 2 and the cargo consists of only two units 3, 4. At each wheelshaft there is a weight sensor 6, 7 which detects the load upon the respective axle. Each weight sensor may take the form of, for example, the air springs of the respective axle. The load criterion in this example is related to the technical or maximum load upon the wheelshafts. For the sake of simplicity, it is assumed here that the criterion is such that each axle 1, 2 should bear the same percentage of the technical maximum load upon the respective trunnion. Given input values are programmed in the vehicle's process unit 5 as follows:

Wheelbase: L
Front axle maximum load: Fm
Rear axle maximum load: Rm

F and R denote the weight detected at the respective axles.

Loading the vehicle involves first placing one of the cargo units 3 on the vehicle's load platform. The values of F and R will thereupon increase and will be transmitted via signal means 8, 9 to the process unit 5, which thus receives the first information about the weight of the unit 3. The process unit 5 has information pre-programmed in it about the vehicle's deadweight on each axle, and it will be easy to use information about the respective values F and R when the unit 3 is in position to calculate the x coordinate of the unit 3, which represents its position in the longitudinal direction, in this case the distance from the rear axle 2.

When the next cargo unit 4 is placed on the platform, its individual weight and x coordinate can be calculated in the same way.

The freight vehicle is now provisionally loaded and the weight sensors 6, 7 will indicate current values of the forces F, R on the respective axles.

Knowing the total weight of the cargo then makes it easy to calculate the set-point values of F and R according to the stated load distribution criterion, i.e. in this case that each axle should be loaded to the same percentage of its

4

respective maximum load.

This set-point value can be used to calculate where the second cargo unit needs to be positioned to fulfil the criterion, leading to a set-point value for its x coordinate. Its current value being known provides immediate information about how far the second unit 4 should be moved to achieve optimum load distribution, i.e. fulfilment of the load distribution criterion.

The process unit is with advantage configured to calculate alternatively how far the first unit 3 should be moved to achieve optimum load distribution.

With advantage, the process unit has an input means enabling the driver to look at both alternatives and choose which cargo unit to move.

The interface between the driver and the process unit may of course be made more sophisticated so that he/she feeds in information about a notional movement of the one unit 3 for a certain distance and receives information about how far the second unit 4 needs to be moved in the light of the resulting notional positioning of the first unit.

Thus the driver can choose whether the unit 3 should be moved a certain distance, the unit 4 should be moved a certain distance or both of them should be moved. It is also possible to take into account other circumstances such as aerodynamics, protruding portions of cargo units, cargo units which are difficult to move, etc.

The parameters and algorithms required for the above calculations are programmed in the process unit and may be configured as follows, using the notations listed below:

$F_0$ = vehicle's deadweight on front axle
$R_0$ = vehicle's deadweight on rear axle
$F_1$ = measured weight on front axle with first unit $M_1$ on board
$R_1$ = measured weight on rear axle with first unit $M_1$ on board
$F_2$ = measured weight on front axle with second unit $M_2$ also on board
$R_2$ = measured weight on rear axle with second unit $M_2$ also on board
$F_m$ = permissible maximum load upon front axle
$R_m$ = permissible maximum load upon rear axle
$L$ = wheelbase
$M_1$ = weight of first cargo unit
$M_2$ = weight of second cargo unit
$x_1$ = distance from rear axle to centre of gravity of first cargo unit
$x_2$ = distance from rear axle to centre of gravity of second cargo unit
$n_1$ = set-point value for $x_1$
$n_2$ = set-point value for $x_2$
$\Delta xe$ = relevant movement of first cargo unit
$\Delta x_2$ = relevant movement of second cargo unit

The following relationships may be set up:

$$M_1 = F_1 + R_1 - F_0 - R_0 \qquad\qquad (1)$$

$$F_1 - F_0 = \frac{M_1 \times x_1}{L} \qquad\qquad (2)$$

$$\text{(1)+(2) gives} \qquad x_1 = \frac{L(F_1 - F_0)}{F_1 + R_1 - F_0 - R_0} \qquad\qquad (3)$$

$$M_2 = F_2 + R_2 - F_1 - R_1 \qquad\qquad (4)$$

$$F_2 - F_1 = \frac{M_2 \times x_2}{L} \tag{5}$$

(4)+(5) gives $\quad x_2 = \dfrac{L(F_2 - F_1)}{F_2 + R_2 - F_1 - R_1} \tag{6}$

The load criterion indicated above means that the load upon the front axle should be $\dfrac{F_2 + R_2}{F_m + R_m} \times F_m$ Hence:

$$F_1 + \frac{M_2 n_2}{L} = \frac{F_2 + R_2}{F_m + R_m} \times F_m \tag{7}$$

(4)+(7) gives $\quad n_2 = \dfrac{F_2 F_m + R_2 F_m - F_1 F_m - F_1 R_m}{(F_m + R_m)(F_2 + R_2 - F_1 - R_1)} L \tag{8}$

(6)+(8) gives $\quad \Delta x_2 = x_2 - n_2 = \dfrac{F_2 R_m - R_2 F_m}{(F_m + R_m)(F_2 + R_2 - F_1 - R_1)} L \tag{9}$

The expression (9) thus indicates how far the second cargo unit $M_2$ should be moved from its original position to achieve optimum load distribution on the basis of the criterion indicated.

Example:

L=5m
$F_0 = 4.5t$, $F_1 = 5.7t$, $F_2 = 6.6t$, $F_m = 6.5t$
$R_0 = 5.5t$, $R_1 = 5.8t$, $R_2 = 10.4t$, $R_m = 11.5t$

$$\Delta x_2 = \frac{6.6 \times 11.5 - 10.4 \times 6.5}{18\,(17 - 11.5)} \times 5 = 0.42m$$

The result in this example is that unit $M_2$ should be moved rearwards to achieve the load criterion.
The example indicated also results in

$M_1 = 1.5t$ from (1)
$x_2 = 4.0m$ from (3)
$M_2 = 5.5t$ from (4)
$x_2 = 0.82m$ from (6)
$n_2 = 0.40m$ from (8)

In the same way as $n_2$ is calculated to find out how far the second unit $M_2$ should be moved in order to fulfil the load criterion, an alternative possibility is to calculate how far the first unit $M_1$ should be moved to fulfil the load criterion.
The following relationship therefore applies:

$$F_0 + F_2 - F_1 + \frac{M_1 n_1}{L} = \frac{F_2 + R_2}{F_m + R_m} \times F_m \tag{7b}$$

(7b)+(1)+(3) gives

$$\Delta x_1 = \frac{F_2 R_m - R_2 F_m}{(F_m + R_m)(F_1 + R_1 - F_0 - R_0)} \times L \qquad (9b)$$

The result in the example indicated is therefore $\Delta x_1$ =1.54m.

The degree of sophistication of the programming of the device may be varied.

In its simplest form it comprises a single algorithm as described above, whereby the latest cargo unit put on board should be moved to achieve the load criterion indicated.

As described above, the device may also be programmed to calculate the movement required for one cargo unit or the other, in which case the driver may choose the more appropriate alternative in the light of other aspects. It may for example seem that only one alternative is possible because one of the units is such that it is impossible to find space for moving the other.

A further function which can easily be integrated in the calculation algorithm is to achieve correct loading by moving both of the cargo units. In this case the driver feeds in a theoretical movement of one of the units from its current position and the device calculates on that basis how far the other unit has to be moved to achieve correct load distribution. This makes possible an iterative procedure whereby the driver can experiment without cargo having to be physically moved. This is done once suitable values of $\Delta x_1$ and $\Delta x_2$ have been adopted.

Instead of the load criterion set in the example, some other criterion may of course be applied. The device may also with advantage have various criteria programmed in, allowing the driver to choose the load distribution criterion on the basis of the specific conditions.

The example described above relates to a case of only two cargo units and only two wheelshafts, with a view to providing a clear and comprehensible picture of the principle, but it should be appreciated that similar calculation algorithms can also easily be set up for cases where there are three or more axles. The algorithms may also be so configured as to be applicable to any desired number of additional cargo units.

A special case is where the invention is applied on a trailer which has only one wheelshaft. This involves distributing the cargo partly on the trailer's wheelshaft and partly on the coupling means by which the trailer is connected to a tractor vehicle. In this case it is advantageous for a weight sensor to be situated close to the coupling means. Zero load is normally desired here for certain types of trailer. For other types of trailer, part of the load has to be absorbed by the tractor vehicle via the coupling means in order to fulfil the load distribution criterion. For certain types of trailer, negative loading may also arise, i.e. the coupling means may exert an upward force upon the tractor vehicle.

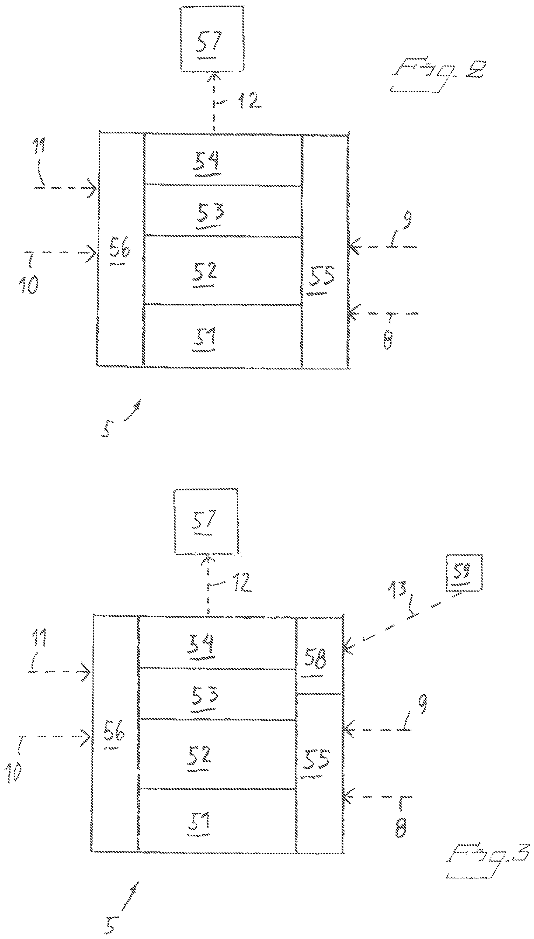

Fig. 2 illustrates the function of the process unit 5 and its interaction with the surroundings. In the process unit there is a first storage means 51 in which various output data are stored, e.g. the x coordinate of each cargo unit, i.e. its distance from the rear wheelshaft, and each wheelshaft's technical maximum load and legally prescribed maximum load. Information from the weight sensors 6, 7 is also stored in the first storage means 51.

There is also a second storage means 52 in which the calculation algorithms are stored, and a third storage means 53 in which load distribution criteria are stored.

A first receiving means 55 is adapted to receiving signals 8, 9 from the weight sensors at the wheelshafts. A second receiving means 56 is adapted to serving as interface with the driver to receive control and command signals 10, 11 from him/her which may comprise inter alia signals for choice of load distribution criterion, for choice of which of the cargo units it is necessary to calculate movements for, and for input of theoretical movements for one or more of the cargo units.

The processing means 54 calculates the values of the movements needed for one or more of the units on the basis of input from the storage means 51, 52, 53 and the receiving means 55, 56. The calculation means 54 generates output signals 12 to a data presentation device 57 which with advantage takes the form of a video screen showing relevant numerical values and possibly also displaying a graphic representation of the vehicle, with its wheelshafts and any cargo units on board.

Fig. 3 illustrates an alternative example of the invention. The device is here supplemented by a separate weight sensor 59, and the process unit 5 comprises a third receiving means 58 adapted to receiving signals 13 from the separate weight sensor 59, which may for example be a barcode reader. When it reads a barcode representing a weight, such a reader serves as a weight sensor.

Many transport situations involve cargo units provided with markings or accompanied by delivery notes provided with markings, e.g. barcodes representing various data about the unit concerned. These data usually include the weight of the unit. In such cases the information about the weight of one, more than one or all of the cargo units is fed into the process unit 5 from the separate weight sensor 59 as an alternative or in addition to the information 8, 9 which comes from the vehicle's weight sensors 6, 7. This embodiment example makes it possible to determine beforehand where one or more of the cargo units should be positioned.

If for example one cargo unit has a barcoded weight indication but the others do not, those with no barcode may be put on board the vehicle first. When the unit provided with barcode is due to be placed on board, the information about its weight may be fed into the process unit 5 before it goes on board. Its optimum x coordinate can thus be calculated beforehand, making it possible to position it immediately at the right location.

Information about the weight of each cargo unit may inter alia appear explicitly on the cargo unit itself or in its delivery note. In such cases, information about the weight of the respective cargo unit may be fed into the process unit manually via a keyboard, this being an alternative within the scope of the invention.

## Claims

1. A device for determination of positioning for cargo consisting of a number of separate cargo units (3, 4) on a freight vehicle provided with a number of wheel shafts (1, 2), which device comprises at least one weight sensor (6, 7, 59), a process unit (5) and signal means (8, 9, 13) for conveying from each weight sensor (6, 7, 59) to the process unit (5) signals (8, 9, 13) representing data from the respective weight sensors (6, 7, 59), which process unit (5) comprises receiving means (55, 58) for receiving said signals (8, 9, 13), storage means (51) for storage of data from a sequence of signals (8, 9, 13) from each weight sensor (6, 7, 59), and processing means (54) for processing of said data, wherein said at least one weight sensor (6, 7) comprises a number of weight sensors (6, 7) provided on the vehicle and adapted to detecting the vehicle's load, including that of its cargo, upon the respective weight sensors (6, 7), and wherein
   at least one weight sensor (6, 7) is provided at each wheel shaft (1, 2),
   **characterised in that** F and R denote weight detected at respective wheel shaft (1, 2), wherein
   the processing means (54) are adapted to generating output signals (12) to a data presentation device (57) which is adapted to show information on how far one or more of said cargo units (3, 4) should be moved from an original position in a longitudinal direction in order to fulfil a specific load distribution criterion and wherein said information is provided by:

   loading the vehicle with a first cargo unit (3) on a load platform of the vehicle,
   transmitting via the signal means (8, 9) to the process unit (5) the values of F and R, the process unit (5) thus receiving information about the weight of the first unit (3), and the process unit (5) having information pre-programmed in it about the vehicle's deadweight on each wheel shaft (1, 2),
   using the information about the respective values F and R to calculate an x coordinate of the first cargo unit (3), which represents its position in the longitudinal direction,
   placing a second cargo unit (4) on the load platform of the vehicle and calculating an x coordinate of the second cargo unit (4) in the same way as for the first cargo unit (3), the weight sensors (6, 7) indicating current values of the forces F, R on the respective wheel shafts (1, 2),
   calculating set-point values of F and R according to the specific load distribution criterion,
   using these set-point values to calculate where the second cargo unit (4) needs to be positioned to fulfil the specific load distribution criterion, leading to a set-point value for the x coordinate of the second cargo unit (4), wherein
   providing information about how far the second cargo unit (4) should be moved to fulfil the specific load distribution criterion based on the knowing of the current value of the x coordinate of the second cargo unit (4).

2. A device according to claim 1, **characterised in that** each weight sensor (6, 7) comprises a pneumatic spring with bellows and a pressure sensor for detecting the pressure in the bellows.

3. A device according to any one of claims 1-2, **characterised in that** said load distribution criterion is related to the technical maximum load upon the respective wheelshafts.

4. A device according to any one of claims 1-3, **characterised in that** said load distribution criterion is related to the legislative maximum load upon the respective wheelshafts (1, 2).

5. A device according to any one of claims 1-4, **characterised in that** said load distribution criterion is pre-programmed in the process unit (5).

6. A device according to claim 5, **characterised in that** a number of alternative load distribution criteria are pre-programmed in the process unit (5) and that the process unit (5) is adapted to receiving command signals (10, 11) representing choices of load distribution criterion.

**7.** A device according to claim 5 or 6, *characterised* **in that** the process unit (5) is adapted to receiving control signals (10, 11) which affect one or more of the parameters on which the respective load distribution criteria are based.

**8.** A device according to any one of claims 1-7, *characterised* **in that** said at least one weight sensor (59) comprises a reading means, e.g. a barcode reader (59), which is signal-connected (13) to the process unit (5).

**9.** A freight vehicle *characterised* **in that** it comprises a device according to any one of claims 1-8.

**Patentansprüche**

**1.** Vorrichtung zur Bestimmung der Positionierung von Fracht, die aus einer Anzahl von separaten Frachteinheiten (3, 4) besteht, auf einem Lastkraftwagen, der mit einer Anzahl von Radwellen (1, 2) versehen ist, wobei die Vorrichtung umfasst: mindestens einen Gewichtssensor (6, 7, 59), eine Verarbeitungseinheit (5) und ein Signalmittel (8, 9, 13) zum Übertragen von jedem Gewichtssensor (6, 7, 59) zur Verarbeitungseinheit (5) von Signalen (8, 9, 13), die Daten von den jeweiligen Gewichtssensoren (6, 7, 59) repräsentieren, wobei die Verarbeitungseinheit (5) umfasst: Empfangsmittel (55, 58) zum Empfangen der Signale (8, 9, 13), Speichermittel (51) zur Speicherung von Daten von einer Sequenz von Signalen (8, 9, 13) von jedem Gewichtssensor (6, 7, 59), und Verarbeitungsmittel (54) zum Verarbeiten von den Daten, wobei

der mindestens eine Gewichtssensor (6, 7) eine Anzahl von Gewichtssensoren (6, 7) umfasst, die auf dem Wagen vorgesehen sind und geeignet sind, die Last des Wagens, einschließlich die seiner Fracht, auf den jeweiligen Gewichtssensoren (6, 7) zu detektieren, und wobei

mindestens ein Gewichtssensor (6, 7) an jeder Radwelle (1, 2) vorgesehen ist, **dadurch gekennzeichnet, dass** F und R Gewicht bezeichnen, das an der jeweiligen Radwelle (1, 2) detektiert wird, wobei

das Verarbeitungsmittel (54) geeignet ist, um Ausgangssignale (12) an eine Datenpräsentationsvorrichtung (57) zu generieren, die geeignet ist, eine Information darzustellen bezüglich wie weit eine oder mehrere der Frachteinheiten (3, 4) von einer ursprünglichen Position in einer longitudinalen Richtung verschoben werden sollten, um ein bestimmtes Kriterium bezüglich einer Lastverteilung zu erfüllen und wobei die Information bereitgestellt wird durch:

Laden des Wagens mit einer ersten Frachteinheit (3) auf einer Ladefläche des Wagens,
Senden mittels des Signalmittels (8, 9) der Werte von F und R an die Verarbeitungseinheit (5), wobei die Verarbeitungseinheit (5) dadurch eine Information über das Gewicht der ersten Einheit (3) empfängt, und wobei die Verarbeitungseinheit (5) eine in ihr vorher programmierte Information über das Totgewicht des Wagens auf jeder Radwelle (1, 2) hat,
Benutzen der Information über die jeweiligen Werte F und R, um eine *x*Koordinate der ersten Frachteinheit (3) zu berechnen, die ihre Position in der longitudinalen Richtung repräsentiert,
Platzieren einer zweiten Frachteinheit (4) auf der Ladefläche des Wagens und Berechnen einer *x*Koordinate der zweiten Frachteinheit (4) in der gleichen Weise wie für die erste Frachteinheit (3), wobei die Gewichtssensoren (6, 7) derzeitige Werte der Kräfte F, R auf den jeweiligen Radwellen (1, 2) andeuten,
Berechnen von Sollwerten für F und R nach dem bestimmten Kriterium bezüglich einer Lastverteilung,
Benutzen dieser Sollwerte, um zu berechnen, wo die zweite Frachteinheit (4) positioniert werden muss, um das bestimmte Kriterium bezüglich einer Lastverteilung zu erfüllen, was zu einem Sollwert für die *x*Koordinate der zweiten Frachteinheit (4) führt, wobei
das Bereitstellen der Information bezüglich wie weit die zweite Frachteinheit (4) verschoben werden sollte, um das bestimmte Kriterium bezüglich einer Lastverteilung zu erfüllen, auf dem Wissen des derzeitigen Wertes der *x*Koordinate der zweiten Frachteinheit (4) basiert.

**2.** Vorrichtung nach Anspruch 1, **dadurch gekennzeichnet, dass** jeder Gewichtssensor (6, 7) eine Luftfederung mit Gebläsen und einen Drucksensor zum Detektieren des Drucks in den Gebläsen umfasst.

**3.** Vorrichtung nach einem der Ansprüche 1-2, **dadurch gekennzeichnet, dass** das Kriterium bezüglich einer Lastverteilung mit der technisch maximalen Last auf den jeweiligen Radwellen in Verbindung steht.

**4.** Vorrichtung nach einem der Ansprüche 1-3, **dadurch gekennzeichnet, dass** das Kriterium bezüglich einer Lastverteilung mit der per Gesetz gegebenen maximalen Last auf den jeweiligen Radwellen in Verbindung steht.

**5.** Vorrichtung nach einem der Ansprüche 1-4, **dadurch gekennzeichnet, dass** das Kriterium bezüglich einer Lastverteilung in der Verarbeitungseinheit (5) vorprogrammiert ist.

6. Vorrichtung nach Anspruch 5, **dadurch gekennzeichnet, dass** eine Anzahl von alternativen Kriterien bezüglich einer Lastverteilung in der Verarbeitungseinheit (5) vorprogrammiert sind und dass die Verarbeitungseinheit (5) geeignet ist, um Rückmeldesignale (10, 11) zu empfangen, die eine Auswahl von einem Kriterium bezüglich einer Lastverteilung repräsentieren.

7. Vorrichtung nach Anspruch 5 oder 6, **dadurch gekennzeichnet, dass** die Verarbeitungseinheit (5) geeignet ist, um Kontrollsignale (10, 11) zu empfangen, die einen oder mehrere der Parameter beeinflusst, auf denen die jeweiligen Kriterien bezüglich einer Lastverteilung basieren.

8. Vorrichtung nach einem der Ansprüche 1-7, **dadurch gekennzeichnet, dass** der mindestens eine Gewichtssensor (59) ein Lesemittel umfasst, z. B. einen Barcode-Leser (59), das mit der Verarbeitungseinheit (5) Signal-verbunden ist.

9. Lastkraftwagen, **dadurch gekennzeichnet, dass** er eine Vorrichtung nach einem der Ansprüche 1-8 umfasst.

**Revendications**

1. Dispositif pour la détermination du positionnement d'une cargaison constituée par un certain nombre d'unités de cargaison séparées (3, 4) sur un véhicule de fret muni d'un certain nombre d'arbres de roues (1, 2), ce dispositif comprenant au moins un capteur de poids (6, 7, 59), une unité de traitement (5) et des moyens de signaux (8, 9, 13) pour acheminer de chaque capteur de poids (6, 7, 59) à l'unité de traitement (5) des signaux (8, 9, 13) représentant des données venant des capteurs de poids respectifs (6, 7, 59), cette unité de traitement (5) comprenant des moyens de réception (55, 58) pour recevoir lesdits signaux (8, 9, 13), des moyens de mémorisation (51) pour la mémorisation de données à partir d'une séquence de signaux (8, 9, 13) venant de chaque capteur de poids (6, 7, 59), et des moyens de traitement (54) pour le traitement desdites données, dans lequel :

ledit au moins un capteur de poids (6, 7) comprend un certain nombre de capteurs de poids (6, 7) disposés sur le véhicule et adaptés de façon à détecter la charge du véhicule, y compris celle de sa cargaison, sur les capteurs de poids respectifs (6, 7), et dans lequel :

au moins un capteur de poids (6, 7) est disposé sur chaque arbre de roues (1, 2),
**caractérisé en ce que** F et R désignent un poids détecté sur un arbre de roues respectif (1, 2), dans lequel :

les moyens de traitement (54) sont adaptés de façon à générer des signaux de sortie (12) pour un dispositif de présentation de données (57) qui est adapté de façon à présenter une information indiquant jusqu'à quelle distance une ou plusieurs desdites unités de cargaison (3, 4) devraient être déplacées à partir d'une position originale dans une direction longitudinale afin de satisfaire à un critère de répartition de charge spécifique, et dans lequel ladite information est procurée par :

le chargement du véhicule avec une première unité de cargaison (3) sur une plateforme de chargement du véhicule,
la transmission, par l'intermédiaire des moyens de signaux (8, 9), à l'unité de traitement (5), des valeurs de F et de R, l'unité de traitement (5) recevant ainsi une information concernant le poids de la première unité (3), et l'unité de traitement (5) comportant une information préprogrammée à l'intérieur de celle-ci, concernant le poids à vide du véhicule sur chaque arbre de roues (1, 2),
l'utilisation de l'information concernant les valeurs respectives de F et de R pour calculer une coordonnée x de la première unité de cargaison (3), qui représente sa position dans la direction longitudinale,
la disposition d'une deuxième unité de cargaison (4) sur la plateforme de chargement du véhicule et le calcul d'une coordonnée x de la deuxième unité de cargaison (4) de la même façon que pour la première unité de cargaison (3), les capteurs de poids (6, 7) indiquant des valeurs actuelles des forces F, R sur les arbres de roues respectifs (1, 2),
le calcul de valeurs de point de consigne de F et de R en fonction du critère de répartition de charge spécifique,
l'utilisation de ces valeurs de point de consigne pour calculer l'endroit où la deuxième unité de cargaison (4) doit être positionnée afin de satisfaire au critère de répartition de charge spécifique, menant à une valeur de point de consigne pour la coordonnée x de la deuxième unité de cargaison (4), dans lequel :

il est délivré une information indiquant jusqu'à quelle distance la deuxième unité de cargaison (4) devrait être déplacée afin de satisfaire au critère de répartition de charge spécifique en fonction de la connaissance de la valeur actuelle de la coordonnée x de la deuxième unité de cargaison (4).

**2.** Dispositif selon la revendication 1, **caractérisé en ce que** chaque capteur de poids (6, 7) comprend un ressort pneumatique avec un soufflet et un capteur de pression pour détecter la pression dans le soufflet.

**3.** Dispositif selon l'une quelconque des revendications 1 à 2, **caractérisé en ce que** ledit critère de répartition de charge est associé à la charge maximale technique sur les arbres de roues respectifs.

**4.** Dispositif selon l'une quelconque des revendications 1 à 3, **caractérisé en ce que** ledit critère de répartition de charge est associé à la charge maximale légale sur les arbres de roues respectifs (1, 2).

**5.** Dispositif selon l'une quelconque des revendications 1 à 4, **caractérisé en ce que** ledit critère de répartition de charge est préprogrammé dans l'unité de traitement (5).

**6.** Dispositif selon la revendication 5, **caractérisé en ce qu'**un certain nombre d'autres critères de répartition de charge sont préprogrammés dans l'unité de traitement (5), et **en ce que** l'unité de traitement (5) est adaptée de façon à recevoir des signaux de commande (10, 11) représentant des choix de critère de répartition de charge.

**7.** Dispositif selon la revendication 5 ou 6, **caractérisé en ce que** l'unité de traitement (5) est adaptée de façon à recevoir des signaux de commande (10, 11) qui affectent l'un ou plusieurs des paramètres sur lesquels sont basés les critères de répartition de charge respectifs.

**8.** Dispositif selon l'une quelconque des revendications 1 à 7, **caractérisé en ce que** ledit au moins un capteur de poids (59) comprend des moyens de lecture, par exemple un lecteur de code-barres (59), qui sont connectés par signal (13) à l'unité de traitement (5).

**9.** Véhicule de fret, **caractérisé en ce qu'**il comprend un dispositif selon l'une quelconque des revendications 1 à 8.

Fig.1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020038193 A
- GB 2191868 A
- WO 2005075948 A
- WO 2006106296 A